# EUROPEAN PATENT APPLICATION

(11) **EP 1 204 282 A1**
(43) Date of publication of application: **08.05.2002**
(21) Application number: 01932217.1
(22) Date of filing: 23.05.2001
(51) Int. Cl.: H04Q 7/30

(54) **RADIO BASE STATION APPARATUS AND RADIO COMMUNICATION METHOD**

(30) Priority: 26.05.2000 JP 2000157430
(71) Applicant: MATSUSHITA ELECTRIC INDUSTRIAL CO., LTD., Kadoma-shi, Osaka 571-8501 (JP)
(72) Inventor: AOYAMA, Takahisa, Yokosuka-shi, Kanagawa 239-0841 (JP); MIYOSHI, Kenichi, Yokohama-shi, Kanagawa 236-0058 (JP); UE, Toyoki, Yokosuka-shi, Kanagawa 238-0022 (JP); HOSHINO, Masayuki, Yokosuka-shi, Kanagawa 239-0841 (JP)
(74) Representative: Grünecker, Kinkeldey, Stockmair & Schwanhäusser Anwaltssozietät
(86) International application number: JP0104306
(87) International publication number: WO0191491

(57) **Abstract**

A base station determines a communication terminal apparatus that uses DSCH based on a plurality of uplink signals containing a request signal for using DSCH shared by all communication terminals under control of the base station, and transmits transmission data and an S-CPICH signal to be transmitted to the determined communication terminal apparatus with the same directivity condition, and using the S-CPICH signal, the communication terminal that uses DSCH performs path search and channel estimation with accuracy.

## Description

### Technical Field

The present invention relates to a radio base station apparatus and wireless communication method in a digital wireless communication system.

### Background Art

CDMA (Code Division Multiple Access), one of access systems in digital wireless communication systems, includes W-CDMA (Wideband-CDMA) system. In the W-CDMA standard, DSCH (Downlink Shared CHannel) is defined as a downlink channel shared by a plurality of communication terminals.

DSCH is a channel for transmitting only data that is assigned to the plurality of terminals for each predetermined transmission unit (for example, each frame), and is a channel to perform fast data communications. Accordingly, DSCH is expected to be used in downlink fast packet transmission.

A communication terminal using DSCH establishes a separate dedicated downlink channel (DCH: Dedicated CHannel), and using a known signal (for example, pilot signal) contained in a DCH signal, performs path search and channel estimation. Otherwise, such a terminal performs path search and channel estimation using a known signal of P-CPICH (Primary-Common Pilot Channel) common to each communication terminal.

Meanwhile, in the CDMA system an adaptive array antenna (hereinafter referred to as "AAA" when necessary) is sometimes used to reduce interference. An adaptive array antenna technique is to provide a base station with an array antenna comprised of a plurality of antenna elements so as to form a directivity while multiplying a received signal by a complex coefficient (hereinafter referred to as "weight") to transmit signals according to the directivity.

However, when it is assumed that an adaptive array antenna is applied to transmitting DSCH signals, since signals are transmitted to each communication terminal according to a different directivity, there occurs a problem that it is not possible to perform path search and channel estimation using P-CPICH shared by each communication terminal.

### Disclosure of the Invention

It is an object of the present invention to provide a radio base station apparatus and wireless communication method capable of performing path search and channel estimation effectively even when an adaptive array antenna is applied to transmitting DSCH signals.

The inventors of the present invention focused attention on that DSCH is a channel for transmitting only data that is assigned to a plurality of users for each predetermined transmission unit (for example, each frame), found out that when an adaptive array antenna is applied to DSCH signals, by using a channel applicable to the adaptive array antenna with DSCH and transmitting a known signal on the channel, a communication terminal using DSCH is capable of performing path search and channel estimation accurately, and then carried out the present invention.

That is, it is a subject matter of the present invention that a base station determines a communication terminal apparatus that uses a shared channel that is common to all the communication terminals under control of a base station, based on a request signal in each of a plurality of uplink signals and which contains a request signal for requesting the use of the shared channel common, and transmits transmission data and supplemental common pilot channel signal to the determined communication terminal apparatus under the same directivity condition, and that the communication terminal apparatus that uses the shared channel performs path search and channel estimation accurately using the supplemental common pilot channel signal.

### Brief Description of the Drawings

FIG.1 is a block diagram illustrating a configuration of a radio base station apparatus according to a first embodiment of the present invention;
FIG.2 is a diagram illustrating an omnidirectional transmit area and radiation pattern according to the first embodiment;
FIG.3 is another diagram illustrating an omnidirectional transmit area and radiation pattern according to the first embodiment;
FIG.4 is a block diagram illustrating a radio base station apparatus according to a second embodiment of the present invention;
FIG.5 is a block diagram illustrating a configuration of a communication terminal apparatus that performs wireless communications with the radio base station apparatus according to the second embodiment;
FIG.6 shows tables indicative of correspondences between spreading codes and M-ary modulation schemes used in a wireless communication method according to the second embodiment;
FIG.7 is a block diagram illustrating a configuration of a radio base station apparatus according to a third embodiment of the present invention;
FIG.8 is a block diagram illustrating a configuration of a communication terminal apparatus that performs wireless communications with the radio base station apparatus according to the third embodiment;
FIG.9 shows tables indicative of correspondences between pilot patterns and M-ary modulation schemes used in a wireless communication method according to the third embodiment;
FIG.10 is a diagram illustrating a transmit frame format in a wireless communication method according to the third embodiment;
FIG.11 is another diagram illustrating a transmit frame format in the wireless communication method according to the third embodiment;
FIG.12 is a block diagram illustrating a configuration of a radio base station apparatus according to a fourth embodiment of the present invention;
FIG.13 is a block diagram illustrating a configuration of a communication terminal apparatus that performs wireless communications with the radio base station apparatus according to the fourth embodiment;
FIG.14 is a diagram illustrating a transmit frame format in a wireless communication method according to the fourth third embodiment; and
FIG.15 is another diagram illustrating a transmit frame format in the wireless communication method according to the fourth embodiment.

### Best Mode for Carrying Out the Invention

Embodiments of the present invention will be described below specifically with reference to accompanying drawings.

### (First embodiment)

In this embodiment, it is described a case where an adaptive array is applied to DSCH, and a base station transmits DSCH signals and S-CPICH (Secondary-CPICH) signals with the same directivity to a communication terminal. It is thereby possible for the communication terminal to receive and demodulate the DSCH signals using the S-CPICH signals.

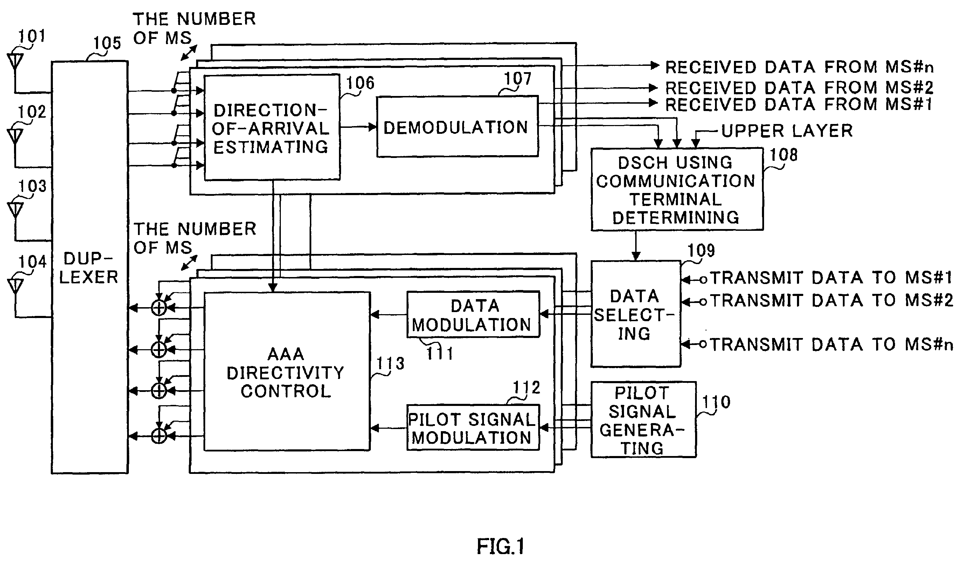

FIG.1 is a block diagram illustrating a configuration of a radio base station apparatus according to the first embodiment of the present invention.

Uplink signals received through antennas 101 to 104 and output to duplexer 105 to undergo the predetermined radio reception processing (such as downconverting and A/D conversion), and respective resultant signals are output to direction-of-arrival estimating sections 106. Each direction-of-arrival estimating section 106 performs array combining processing on the received signals, further performs despreading on the combined signal, extracts the received signal from a corresponding communication terminal (user), and estimates the direction of arrival of the received signal from the communication terminal (user). Further, the received signal is demodulated in demodulation section 107 for the communication terminal to be received data.

In addition, direction-of-arrival estimating sections 106 and demodulation sections 107 are provided for each communication terminal (MS), and demodulation sections 107 obtain respective received signals of communication terminals (MS#1 received signal to MS#n received signal).

The demodulated signal is output to DSCH using communication terminal determining section 108. DSCH using communication terminal determining section 108 determines communication terminals that use DSCH, based on communication terminals that transmit a request signal to use DSCH, and information of an upper layer on communication terminal permitted to use DSCH. Further, DSCH using communication terminal determining section 108 outputs the determined information to data selecting section 109.

Data selecting section 109 selects data of the communication terminal assigned DSCH from respective transmit data of communication terminals (MS#1 transmit data - MS#n transmit data) to output to data modulation section 111. Data modulation section 111 performs modulation and spreading on the transmit data, and outputs the spread signal to AAA directivity control section 113.

Pilot signal generating section 110 generates a pilot signal on S-CPICH, and outputs the pilot signal to pilot signal modulation section 112. Pilot signal modulation section 112 performs modulation and spreading on the pilot signal, and outputs the spread pilot signal to AAA directivity control section 113.

In addition, data modulation sections 111, pilot signal modulation sections 112, and AAA directivity control sections 113 are provided for each communication terminal (MS).

AAA directivity control section 113 generates a transmit directivity based on the information on the direction of arrival estimated in direction-of-arrival estimating section 106. The signal from data modulation section 111 and the signal from pilot signal modulation section 112 each are multiplied by each of respective weights (for antennas 101 to 104) corresponding to the directivity, and respective signals are transmitted through duplexer 105 from antennas 101 to 104 to the communication terminal.

The operation of the base station apparatus with the above configuration will be described below.

When a communication terminal requests using DSCH, the terminal transmits the request signal on uplink to the base station. In the base station, demodulation section 107 demodulates the request signal to output to DSCH using communication terminal determining section 108. DSCH using communication terminal determining section 108 determines a communication terminal to be permitted to use DSCH based on request signals from communication terminals and information (priority information and channel state) of the upper layer.

That is, since request signals are all output to DSCH using communication terminal determining section 108, the section 108 is capable of grasping communication terminals desiring to use DSCH. Further, since from the upper layer DSCH using communication terminal determining section 108 receives the information of which communication terminal has a higher priority to use DSCH, the section 108 determines the communication terminal to use DSCH according to the priority. In addition, on the upper layer, for example, channel states are monitored, and the priority is predetermined so that a communication terminal with the good channel state has a higher priority.

Further, it may be possible that instead of being notified the priority information and channel state on the upper layer, DSCH using communication terminal determining section 108 notifies the request information on the upper layer, and that on the upper layer, a communication terminal to be permitted to use DSCH is determined and the determined information is notified to the section 108. Furthermore, it may be possible that DSCH using communication terminal determining section 108 itself makes the determination.

When DSCH using communication terminal determining section 108 has determined the communication terminal that uses DSCH, the section 108 outputs the information to data selecting section 109. Since transmit data for communication terminals (MS#1 transmit data to MS#n transmit data) are all input to data selecting section 109, the section 109 selects only transmit data for the communication terminal assigned DSCH from the input transmit data to output to data modulation section 111. Data modulation section 111 modulates the transmit data for the communication terminal assigned DSCH, and spreads the modulated transmit data with a predetermined spreading code.

Pilot signal generating section 110 generates a pilot signal on S-CPIH and outputs the pilot signal to pilot signal modulation section 112. Pilot signal modulation section 112 modulates the pilot signal, and spreads the modulated pilot signal with a spreading code different from that used in the transmit data.

The spread transmit data on DSCH and spread pilot signal are output to AAA directivity control section 113. AAA directivity control section 113 controls the directivity to the communication terminal to transmit DSCH signals, based on the direction of arrival estimated from the received signal of the communication terminal. That is, AAA directivity control section 113 calculates weights to direct a beam to the communication terminal to transmit DSCH signals, and a multiplier multiplies each of the transmit data and pilot signal for the communication terminal to transmit DSCH signals by each of the calculated weights. The weighted transmit data and pilot signals are transmitted to the communication terminal that the directivity is directed to, i.e., the communication terminal that uses DSCH.

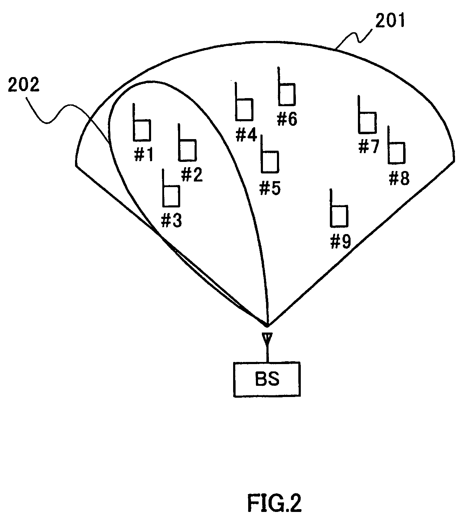

FIG.2 is a diagram illustrating an omnidirectional transmit area and radiation pattern. Base station BS transmits a P-CPICH pilot signal with no directivity to all users, i.e., communication terminals #1 to #9. Reference numeral 201 denotes the omnidirectional transmit area.

On the other hand, a DSCH signal and S-CPICH signal are coupled, i.e., multiplexed, and the resultant signal is transmitted to the communication terminal (herein communication terminal #1) that uses DSCH. Reference numeral 202 denotes the radiation pattern formed in the above-mentioned processing.

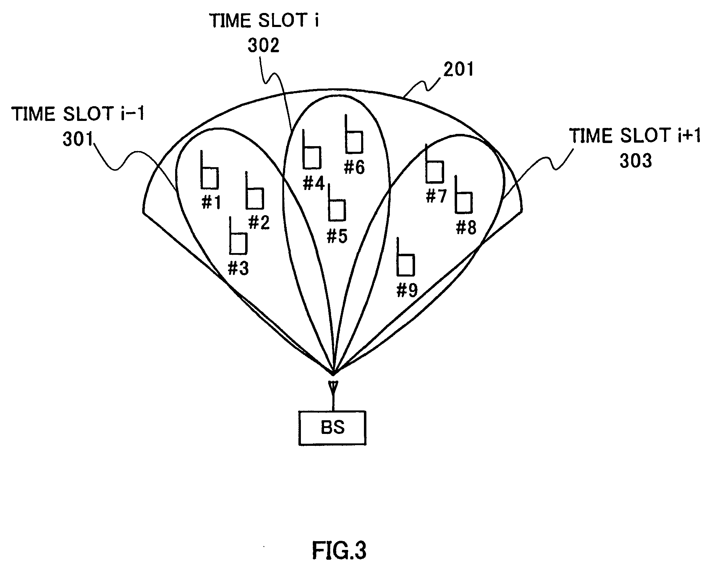

When signals are thus transmitted to a communication terminal that uses DSCH, for example, when communication terminals #1, #5 and #7 are determined as communication terminals that use DSCH and DSCH signals are transmitted with time slots i-1, i and i+1 respectively for the communication terminals, as shown in FIG.3, the directivity is varied for each time slot. In other words, a weight multiplied by each of the transmit data and pilot signal is varied. Specifically, in FIG.3, radiation pattern 301 is formed so as to transmit time slot i-1 to communication terminal #1, radiation pattern 302 is formed so as to transmit time slot i to communication terminal #5, and radiation pattern 303 is formed so as to transmit time slot i+1 to communication terminal #7.

Thus, S-CPICH is a common pilot channel to support P-CPICH and does not need to be transmitted always to the entire cell or sector. Therefore, signals on S-CPICH and DSCH are multiplexed and transmitted with the same directivity. It is thereby possible to perform the path search and channel estimation on DSCH using S-CPICH.

As a result, it is possible to demodulate DSCH signals with reliability and to perform fast data communications using DSCH.

### (Second embodiment)

In the second embodiment, it is described a case of transmitting information on modulation scheme of DSCH signal by using a spreading code on S-CPICH. It is thereby possible for a communication terminal to recognize the modulation scheme easily to modulate the DSCH signal.

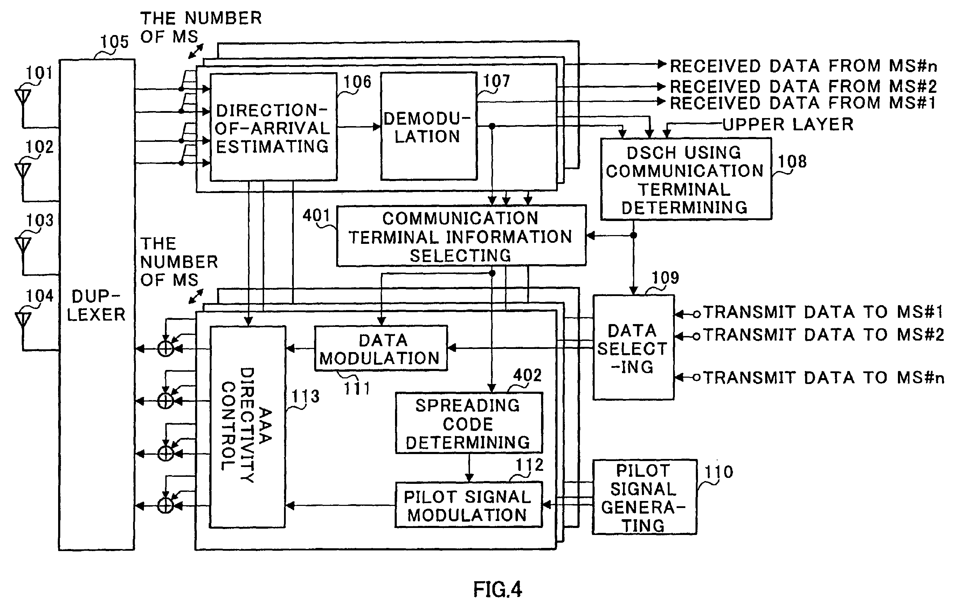

FIG.4 is a block diagram illustrating a configuration of a radio base station apparatus according to the second embodiment of the present invention. In addition, in FIG.4 the same sections as those in FIG.1 are assigned the same reference numerals as in FIG.1 to omit specific descriptions thereof.

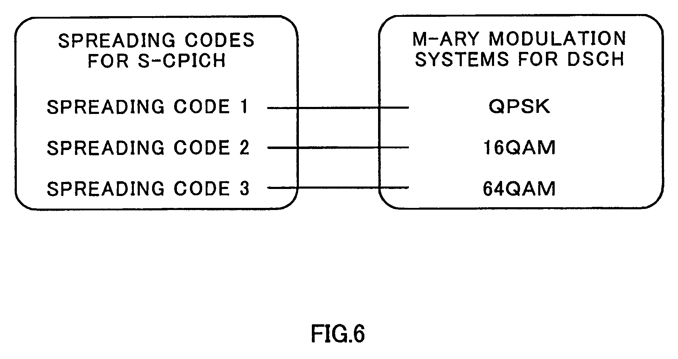

The radio base station apparatus illustrated in FIG.4 is further provided with communication terminal information selecting section 401 and spreading code determining section 402. Demodulation section 107 inputs the demodulated signal to communication terminal information selecting section 401. The section 401 acquires the information on modulation/demodulation capability (which modulation scheme is available) and modulation scheme from the demodulated signal, and outputs only the information of the communication terminal assigned DSCH determined in DSCH using communication terminal determining section 108 to spreading code determining section 402. Spreading code determining section 402 determines a spreading code to use by referring to the correspondence tables illustrated in FIG.6 based on the information on modulation/demodulation capability and modulation scheme.

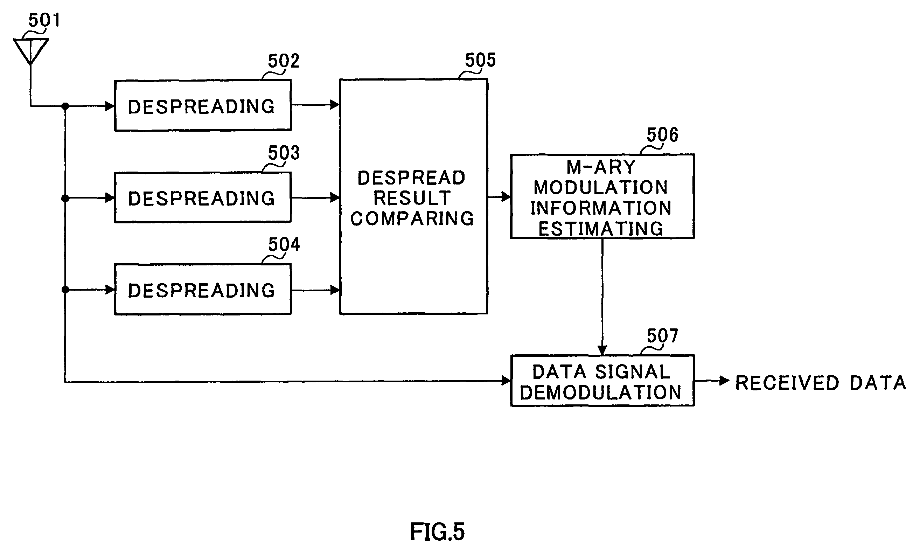

FIG.5 is a block diagram illustrating a configuration of a communication terminal apparatus that performs wireless communications with the above-mentioned radio base station apparatus.

A downlink signal received through antenna 501 is subjected to the predetermine radio reception processing (such as downconverting and A/D conversion), and the processed signal is output to despreading sections 502 to 504 to be despread with a predetermined spreading code. All the despread results are output to despread result comparing section 505.

Despread result comparing section 505 compares respective despread signals from despreading sections 502 to 504, and outputs the compared result (spreading code information) to M-ary modulation information estimating section 506. Based on the spreading code information, M-ary modulation information estimating section 506 estimates a modulation scheme applied to the DSCH signal, i.e., which M-ary modulation is applied. Then, the section 506 outputs the estimated information on M-ary modulation to data signal demodulation section 507. According to the information on M-ary modulation, data signal demodulation section 507 demodulates the DSCH signal by the M-ary demodulation scheme to obtain received data.

The operation of the base station apparatus with the above configuration will be described below.

It is the same as in the first embodiment to determine a communication terminal that uses DSCH corresponding to requests to use DSCH from communication terminals. Uplink signals from each communication terminal include the information on modulation/demodulation capability (which modulation scheme is available) and modulation scheme along with the request signal.

When demodulation section 107 demodulates the information on modulation/demodulation capability and modulation scheme, the section 107 outputs the information to communication terminal information selecting section 401. Communication terminal information selecting section 401 receives the information on the communication terminal that uses DSCH from DSCH using communication terminal determining section 108. Based on the information on the communication terminal that uses DSCH, communication terminal information selecting section 401 selects the information on modulation/demodulation capability and modulation scheme of the communication terminal that uses DSCH from respective information on modulation/demodulation capability and modulation scheme from communication terminals to output to spreading code determining section 402.

Based on the information on modulation/demodulation capability and modulation scheme, spreading code determining section 402 refers to the correspondence tables illustrated in FIG.6 and determines the spreading code. For example, spreading code 1 is used when QPSK is indicated by the information on modulation/demodulation capability and modulation scheme of the communication terminal that uses DSCH, spreading code 2 is used when 16QAM is indicated by the information on modulation/demodulation capability and modulation scheme of the communication terminal that uses DSCH, and spreading code 3 is used when 64QAM is indicated by the information on modulation/demodulation capability and modulation scheme of the communication terminal that uses DSCH. It is herein assumed that the information on modulation/demodulation capability and modulation scheme is indicative of 16QAM and that spreading code 2 is used.

In addition, the same correspondence tables illustrated in FIG.6 are stored in advance in the base station and communication terminal, and by referring to the tables, it is possible to determine the modulation scheme (the number of M-ary). Further, it may be also possible to broadcast the tables using a different channel.

The S-CPICH signal generated in pilot signal generating section 110 is modulated, and is spread with the spreading code determined as described above. The transmit data for the communication terminal that uses DSCH is also modulated, and is spread with a predetermined spreading code.

The spread DSCH transmit data and pilot signal are transmitted to the communication terminal that uses DSCH according to the directivity controlled in AAA directivity control section 113.

In the communication terminal that uses DSCH, the pilot signal among the received DSCH signal and S-CPICH pilot signal is subjected to the predetermined radio reception processing, and is despread in despreading sections 502 to 504 with spreading codes 1 to 3 (candidates for the spreading code used in the base station) in the correspondence table in FIG.6. For example, despreading section 502 uses spreading code 1, despreading section 503 uses spreading code 2, and despreading section 504 uses spreading code 3.

All the despread results are output to despread result comparing section 505. Despread result comparing section 505 specifies a spreading code that is used in the base station. Specifically, the section 505 compares the respective despread results of despreading sections 502 to 504. More specifically, for example, the integrated values (correlation values) of the despread results are compared. Since it is herein assumed that the base station performs spreading with spreading code 2, the correlation value of the despread result from despreading section 503 has the greatest value, and thereby it is determined that the spreading is performed with spreading code 2. The information indicative of spreading code 2 is output to M-ary modulation information estimating section 506.

By referring to the correspondence tables illustrated in FIG.6 based on the information indicative of spreading code 2, M-ary modulation information estimating section 506 confirms that the modulation scheme is 16QAM. The section 506 outputs the confirmed information indicative of the modulation scheme (16QAM) to data signal demodulation section 507. Data signal demodulation section 507 demodulates the DSCH signal by the demodulation scheme (16QAM) determined in M-ary modulation information estimating section 506 to obtain received data. In addition, the DSCH signal has been subjected to the predetermined radio reception processing and to despreading with the spreading code used in the base station.

Thus, since the information on modulation scheme to demodulate DSCH signals is transmitted by using a spreading code on S-CPICH, the communication terminal that uses DSCH is capable of confirming the modulation scheme by identifying the spreading code. In this way the communication terminal is capable of demodulating DSCH signals with reliability. As a result, the base station is capable of varying the M-ary modulation scheme when necessary to transmit signals.

Further, since S-CPICH signals and DSCH signals are multiplexed to be transmitted, the information to demodulate DSCH signals is notified to the communication terminal using DSCH in real time within a period of time the channel state is not changed.

In the configuration of the communication terminal illustrated in FIG.5, despreading sections 502 to 504 are provided for each spreading code. Further, in the present invention it may be possible to provide one despreading section. In this case, the S-CPICH signal is divided into portions corresponding to different spreading codes, the despreading section performs the despreading with different spreading codes at respective different periods, and the respective despread results of the different spreading codes are compared.

Moreover, in the above description, it is described the case of notifying the communication terminal of the correspondence between the spreading code on S-CPICH and the modulation scheme. In this embodiment it may be also possible to notify the communication terminal of the correspondence between the spreading code on DSCH and the modulation scheme.

### (Third embodiment)

In this embodiment, it is described a case of transmitting information on modulation scheme of DSCH signal by using a pilot pattern on S-CPICH. It is thereby possible for a communication terminal to recognize the modulation scheme easily and to demodulate DSCH signals.

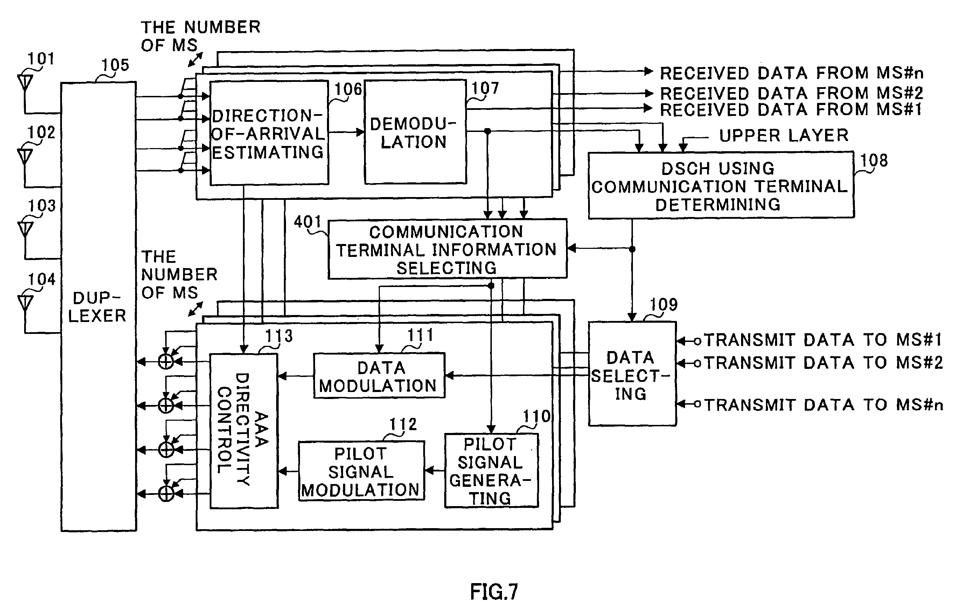

FIG.7 is a block diagram illustrating a configuration of a radio base station apparatus according to the third embodiment of the present invention. In addition, in FIG.7 the same sections as those in FIG.1 are assigned the same reference numerals as in FIG.1 to omit specific descriptions thereof.

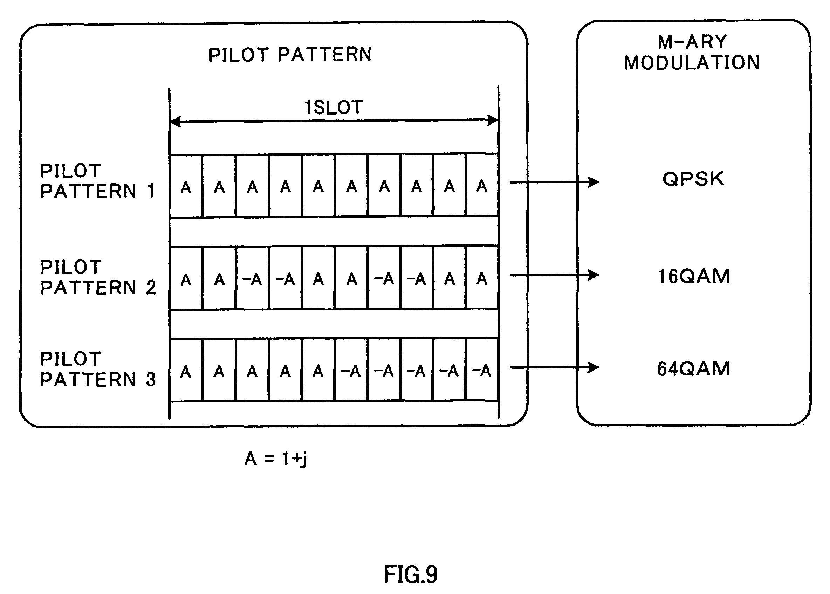

The radio base station apparatus illustrated in FIG.7 is further provided with communication terminal information selecting section 401. Demodulation section 107 inputs the demodulated signal to communication terminal information selecting section 401. The section 401 acquires the information on modulation/demodulation capability (which modulation scheme is available) and modulation scheme of a communication terminal from the demodulated signal, and outputs only the information of the communication terminal assigned DSCH determined in DSCH using communication terminal determining section 108 to pilot signal generating section 110. Pilot signal generating section 110 determines a pilot pattern by referring to the correspondence tables illustrated in FIG.9 based on the information on modulation/demodulation capability and modulation scheme.

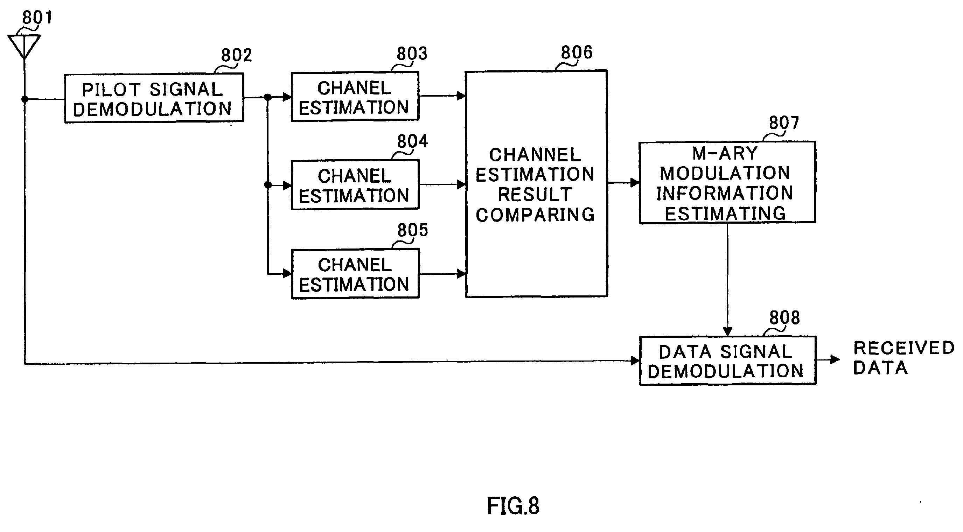

FIG.8 is a block diagram illustrating a configuration of a communication terminal apparatus that performs wireless communications with the above-mentioned radio base station apparatus.

A downlink signal received through antenna 801 is subjected to the predetermined radio reception processing (such as downconverting and A/D conversion), and the processed signal is despread with a predetermined spreading code used in the base station. The despread pilot signal is output to channel estimation sections 803 to 805 and is used in the channel estimation. All the channel estimation results are output to channel estimation result comparing section 806.

Channel estimation result comparing section 806 compares respective channel estimation results in channel estimation sections 803 to 805, and outputs the compared result (pilot pattern information) to M-ary modulation information estimating section 807. Based on the pilot pattern information, M-ary modulation information estimating section 807 estimates a modulation scheme applied to the DSCH signal, i.e., which M-ary modulation is applied. Then, the section 806 outputs the estimated information on M-ary modulation to data signal demodulation section 808. Data signal demodulation section 808 demodulates the DSCH signal by the demodulation scheme corresponding to the information on M-ary modulation to obtain received data.

The operation of the base station apparatus with the above configuration will be described below.

It is the same as in the first embodiment to determine a communication terminal that uses DSCH corresponding to requests to use DSCH from communication terminals. Uplink signals from each communication terminal include the information on modulation/demodulation capability (which modulation scheme is available) and modulation scheme along with the request signal.

When demodulation section 107 demodulates the information on modulation/demodulation capability and modulation scheme, the section 107 outputs the information to communication terminal information selecting section 401. Communication terminal information selecting section 401 receives the information on the communication terminal that uses DSCH from DSCH using communication terminal determining section 108. Based on the information on the communication terminal that uses DSCH, communication terminal information selecting section 401 selects the information on modulation/demodulation capability and modulation scheme of the communication terminal that uses DSCH from respective information on modulation/demodulation capability and modulation scheme from communication terminals to output to pilot signal generating section 110.

Based on the information on modulation/demodulation capability and modulation scheme, pilot signal generating section 110 refers to the correspondence tables illustrated in FIG.9 and determines the pilot pattern. For example, pilot pattern 1 is used when QPSK is indicated by the information on modulation/demodulation capability and modulation scheme of the communication terminal that uses DSCH, pilot pattern 2 is used when 16QAM is indicated by the information on modulation/demodulation capability and modulation scheme of the communication terminal that uses DSCH, and pilot pattern 3 is used when 64QAM is indicated by the information on modulation/demodulation capability and modulation scheme of the communication terminal that uses DSCH. It is herein assumed that the information on modulation/demodulation capability and modulation scheme is indicative of 16QAM and that pilot pattern 2 is used.

In addition, the same correspondence tables illustrated in FIG.9 are stored in advance in the base station and communication terminal, and by referring to the tables, it is possible to determine the modulation scheme (the number of M-ary).

The S-CPICH pilot signal thus generated in pilot signal generating section 110 is modulated, and is spread with a predetermined spreading code. Also, the transmit data for the communication terminal that uses DSCH is modulated, and is spread with the predetermined spreading code.

The spread DSCH transmit data and pilot signal are transmitted to the communication terminal that uses DSCH according to the directivity controlled in AAA directivity control section 113.

In the communication terminal that uses DSCH, the pilot signal among the received DSCH signal and S-CPICH pilot signal is subjected to the predetermined radio reception processing, is despread, and is demodulated in pilot signal demodulation section 802. The demodulated pilot signal is output to channel estimation sections 803 to 805 and subjected to channel estimation with pilot patterns 1 to 3 (candidates for the pilot pattern used in the base station) in the correspondence table in FIG.9. For example, channel estimation section 803 uses pilot pattern 1, channel estimation section 804 uses pilot pattern 2, and channel estimation section 805 uses pilot pattern 3.

All the channel estimation results are output to channel estimation result comparing section 806. Channel estimation result comparing section 806 specifies the pilot pattern used in the base station. Specifically, the section 806 compares the respective channel estimation results of channel estimation sections 803 to 805. More specifically, the section 806 calculates fluctuations of the respective channel estimation results of channel estimation sections 803 to 805, compares the fluctuations, and selects a channel estimation value with the smallest fluctuation. Since it is assumed that the base station uses pilot pattern 2 , the channel estimation result from channel estimation section 804 has the smallest fluctuation, and thereby it is determined that pilot pattern 2 is used. The information indicative of pilot pattern 2 is output to M-ary modulation information estimating section 807. Further, it is considered to perform channel estimation on the received signal with each pilot pattern in identifying the pilot pattern, and to select a greatest one from channel estimation values with pilot patterns.

By referring to the correspondence tables illustrated in FIG.9 based on the information indicative of pilot pattern 2, M-ary modulation information estimating section 807 confirms that the modulation scheme is 16 QAM, and outputs the confirmed information indicative of the modulation scheme (16QAM) to data signal demodulation section 808. Data signal demodulation section 808 demodulates the DSCH signal by the demodulation scheme (16QAM) determined in M-ary modulation information estimating section 807 to obtain received data. In addition, the DSCH signal has been subjected to the predetermined radio reception processing and to despreading with the spreading code used in the base station.

Thus, since the information on the modulation scheme to demodulate DSCH signals is transmitted by using a pilot pattern on S-CPICH, the communication terminal that uses DSCH is capable of confirming the modulation scheme by identifying the pilot pattern. In this way the communication terminal is capable of demodulating DSCH signals with reliability. As a result, the base station is capable of varying the M-ary modulation scheme when necessary to transmit signals.

Further, since S-CPICH signals and DSCH signals are multiplexed to be transmitted, the information to demodulate DSCH signals is notified to the communication terminal using DSCH in real time within a period of time the channel state is not changed.

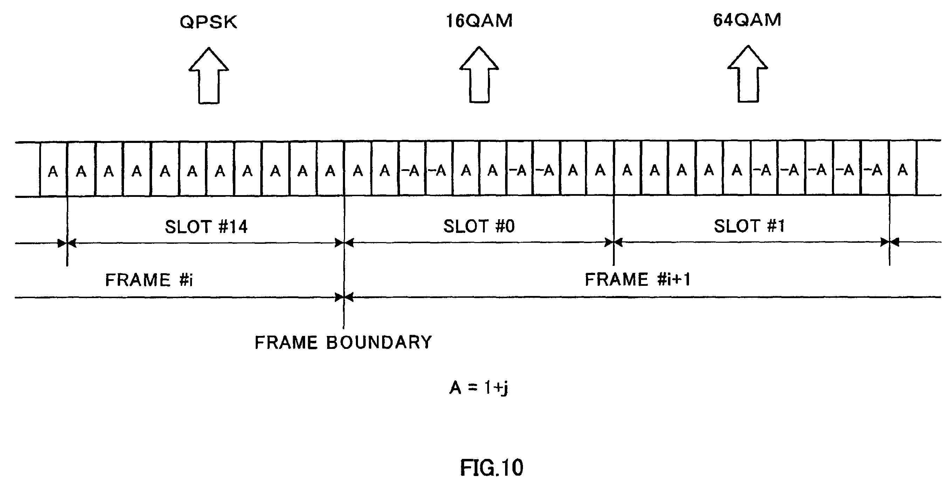

When transmitting signals to communication terminals that use DSCH, the base station transmits S-CPICH pilot signals with pilot patterns illustrated in FIG.10. For example, it is assumed that final slot #14 of frame #i has pilot pattern 1, first slot #0 of frame #i+1 has pilot pattern 2, and that second slot #1 of frame #i+1 has pilot pattern 3. In this case, the base station transmits QPSK-modulated DSCH signals to a communication terminal to which slot #14 is transmitted on DSCH, 16QAM-modulated DSCH signals to a communication terminal to which slot #0 is transmitted on DSCH, and 64QAM-modulated DSCH signals to a communication terminal to which slot #1 is transmitted on DSCH.

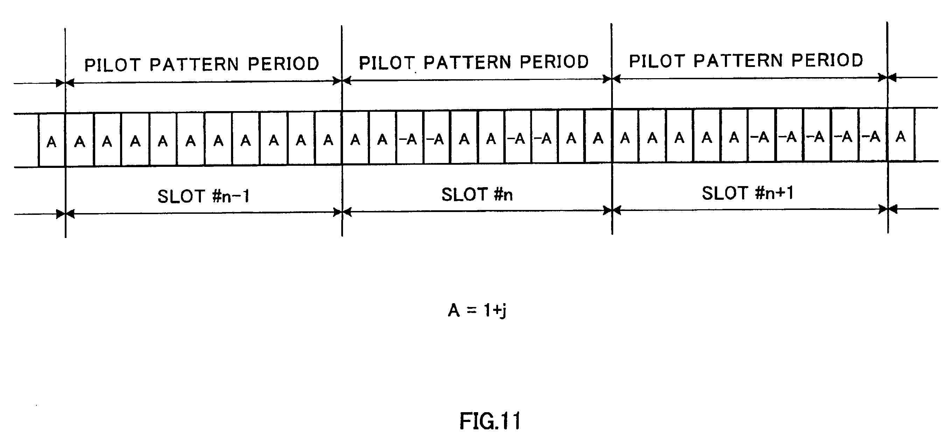

In this case, as illustrated in FIG.11, it is preferable that a period of a time slot (a smallest unit for use in DSCH) is coincident with a period of a pilot pattern. Such a case is the most suitable in accuracy and efficiency for demodulating the information (M-ary modulation information) on modulation/demodulation capacity and modulation scheme.

### (Fourth embodiment)

In this embodiment, it is described a case of transmitting on S-CPICH M-ary modulation information on modulation scheme of DSCH signal. It is thereby possible for a communication terminal to recognize the modulation scheme easily and to demodulate DSCH signals.

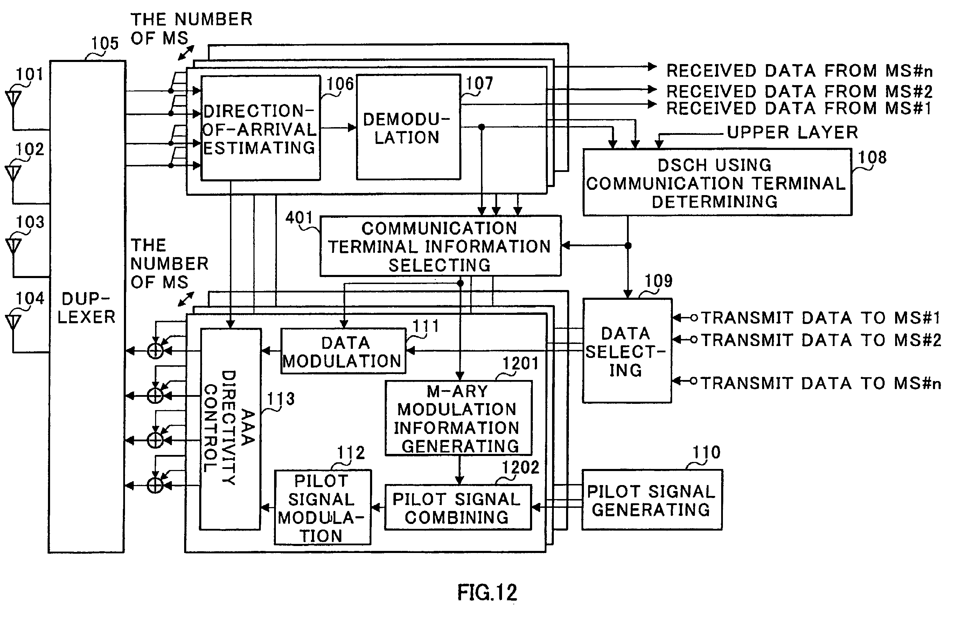

FIG.12 is a block diagram illustrating a configuration of a radio base station apparatus according to fourth embodiment of the present invention. In addition, in FIG.12 the same sections as those in FIG.1 are assigned the same reference numerals as in FIG.1 to omit specific descriptions thereof.

The radio base station apparatus illustrated in FIG.12 is further provided with communication terminal information selecting section 401, M-ary modulation information generating section 1201 and pilot signal combining section. Demodulation section 107 inputs the demodulated signal to communication terminal information selecting section 401. The section 401 acquires the information on modulation/demodulation capability (which modulation scheme is available) and modulation scheme of a communication terminal from the demodulated signal, and outputs only the information of the communication terminal assigned DSCH determined in DSCH using communication terminal determining section 108 to M-ary modulation information generating section 1210. M-ary modulation information generating section 1202 generates M-ary modulation information based on the information on modulation/demodulation capability and modulation scheme to output to pilot signal combining section 1202. Pilot signal combining section 1202 combines a pilot signal generated in pilot signal generating section 110 and the M-ary modulation information.

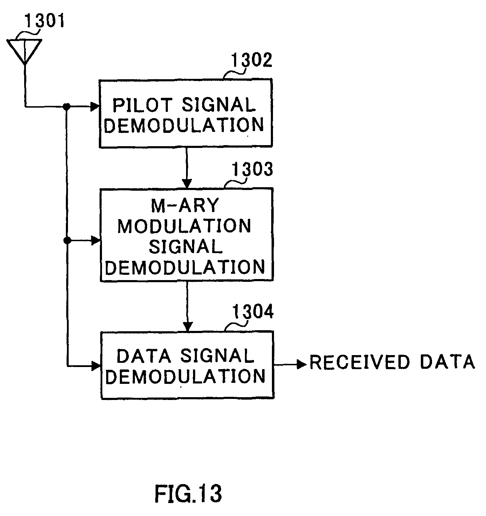

FIG.13 is a block diagram illustrating a configuration of a communication terminal apparatus that performs wireless communications with the above-mentioned radio base station apparatus.

A downlink signal received through antenna 1301 is subjected to the predetermined radio reception processing (such as downconverting and A/D conversion), and the processed signal is despread with a predetermined spreading code used in the base station. The despread pilot signal is demodulated in pilot signal demodulation section 1302. The despread pilot signal is also output to M-ary modulation signal demodulation section 1303 to demodulate an M-ary modulation signal inserted into the pilot signal.

M-ary modulation signal demodulation section 1303 determines a modulation scheme based on the M-ary modulation signal, and then outputs the modulation scheme information to data signal demodulation section 1304. According to the modulation scheme information, data signal demodulation section 1304 demodulates DSCH signals to obtain received data.

The operation of the base station apparatus with the above configuration will be described below.

It is the same as in the first embodiment to determine a communication terminal that uses DSCH corresponding to requests to use DSCH from communication terminals. Uplink signals from each communication terminal include the information on modulation/demodulation capability (which modulation scheme is available) and modulation scheme along with the request signal.

When demodulation section 107 demodulates the information on modulation/demodulation capability and modulation scheme, the section 107 outputs the information to communication terminal information selecting section 401. Communication terminal information selecting section 401 receives the information on the communication terminal that uses DSCH from DSCH using communication terminal determining section 108. Based on the information on the communication terminal that uses DSCH, communication terminal information selecting section 401 selects the information on modulation/demodulation capability and modulation scheme of the communication terminal that uses DSCH from respective information on modulation/demodulation capability and modulation scheme from communication terminals to output to M-ary modulation information generating section 1202.

Based on the information on modulation/demodulation capability and modulation scheme, M-ary modulation information generating section 1202 determines a modulation scheme (M-ary modulation information). It is herein assumed that the information on modulation/demodulation capability and modulation scheme is indicative of 16QAM. The M-ary modulation information is output to pilot signal combining section 1202. Pilot signal combining section 1202 inserts the M-ary modulation information into the pilot signal. The pilot signal is output to pilot signal modulation section 112.

The modulated pilot signal is spread with a predetermined spreading code. The transmit data for the communication terminal that uses DSCH is modulated, and is spread with the predetermined spreading code.

The spread DSCH transmit data and pilot signal are transmitted to the communication terminal that uses DSCH according to the directivity controlled in AAA directivity control section 113.

In the communication terminal that uses DSCH, the pilot signal among the received DSCH signal and S-CPICH pilot signal is subjected to the predetermined radio reception processing, is despread, and is demodulated in pilot signal demodulation section 1302. The M-ary modulation information inserted into the pilot signal is demodulated in M-ary modulation signal demodulation section 1303. In other words, it is determined that the M-ary modulation information is indicative of 16QAM as the modulation scheme.

The determined information on modulation scheme (16QAM) is output to data signal demodulation section 1304. Data signal demodulation section 1304 demodulates DSCH signals by the demodulation scheme (16QAM) determined in M-ary modulation information demodulation section 1303 to obtain received data. In addition, the DSCH signals have been subjected to the predetermined radio reception processing and to despreading with the spreading code used in the base station.

Thus, since the M-ary modulation information on the modulation scheme to demodulate DSCH signals is inserted into the pilot signal to be transmitted on S-CPICH, the communication terminal that uses DSCH is capable of confirming the modulation scheme by demodulating the M-ary modulation information. In this way the communication terminal is capable of demodulating DSCH signals with reliability. As a result, the base station is capable of varying the M-ary modulation scheme when necessary to transmit signals.

Further, S-CPICH signals and DSCH signals are multiplexed, the information for use in demodulating DSCH signals is notified to the communication terminal using DSCH in real time within a period of time the channel state is not changed.

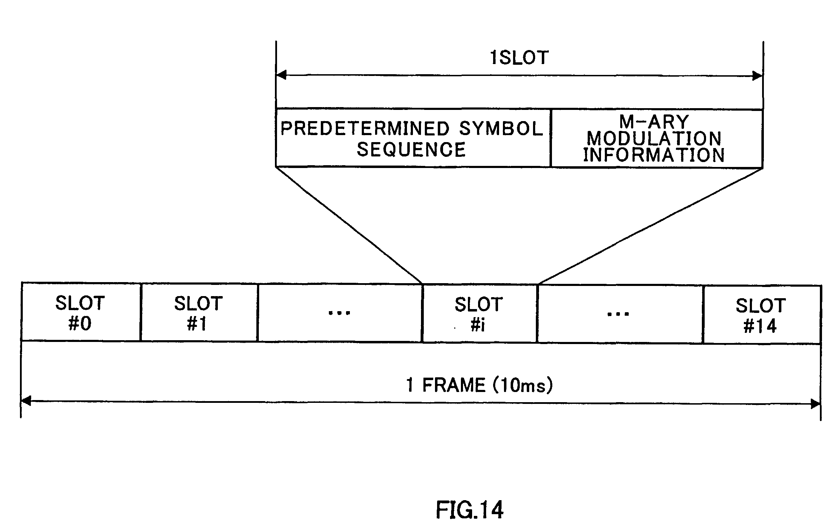

When transmitting signals to the communication terminal that uses DSCH, the base station apparatus transmits on S-CPICH pilot signals as illustrated in FIG.14. For example, M-ary modulation information is inserted into a slot for pilot signal in addition to a predetermined symbol sequence.

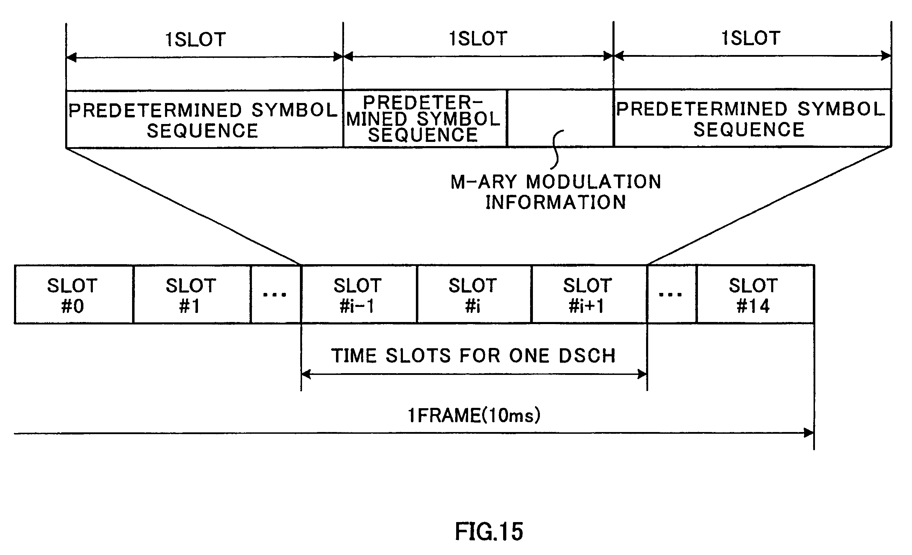

Further, in this case, it is preferable to insert the M-ary modulation information to suit a period of time slots for DSCH (minimum unit for use by DSCH). That is, when DSCH time slots are composed of a few time slots, as illustrated in FIG.15, the M-ary modulation information is inserted every a few slots to suit the period. It is thereby possible to obtain the most suitable case in accuracy and efficiency for demodulating the information on modulation/demodulation capacity and modulation scheme. In addition, in the case where DSCH time slots are not separated into slots, it is possible to cope with such a case by inserting the M-ary modulation information into the corresponding DSCH time slots.

The above-mentioned embodiments 1 to 4 are capable of being carried into practice in a combination thereof as appropriate.

The present invention is not limited to the above-mentioned embodiments 1 to 4, and is capable of being carried into practice with various modifications thereof. For example, while the above-mentioned embodiments 1 to 4 describe DSCH in W-CDMA, the present invention is not limited to DSCH, and is capable of being applied to other channels shared by all the communication terminals under the control of a base station.

Further, while the above-mentioned embodiments 1 to 4 describe the case of using S-CPICH to be multiplexed on DSCH, such a channel is not limited particularly as long as the channel includes a pilot signal usable in demodulating DSCH signals and an adaptive array is applicable to the channel.

Furthermore, the above-mentioned embodiments 1 to 4 describe the case of using a method for generating directivity to each communication terminal as the adaptive array technique. However, the present invention is capable of being applied to a case of grouping together a plurality of channels (users) using uplink signals and of using a common weight (group weight) in the same group.

A radio base station apparatus of the present invention adopts a configuration provided with a determining section that determines a communication terminal apparatus that uses a shared channel based on a plurality of uplink request signals containing a request signal for using the shared channel shared by all communication terminals under control of the base station apparatus, a modulation section that modulates transmit data and a supplemental common pilot channel signal to be transmitted to the determined communication terminal apparatus, and a directivity control section that transmits the transmit data and the supplemental common pilot channel signal with the same directivity.

According to this configuration, since the supplemental common pilot channel signal is used which does not need to be transmitted always to the entire cell or sector, such a pilot channel is coupled with the shared channel shared by all communication terminals under control of the base station to transmit signals with the same directivity. It is thereby possible to perform path search and channel estimation on the shared channel using the supplemental common pilot channel signal. As a result, it is possible to demodulate shared channel signals with reliability and to perform fast data communications using the shared channel.

A radio base station apparatus of the present invention adopts a configuration provided with a determining section that determines a communication terminal apparatus that uses a shared channel based on a plurality of uplink request signals containing capability information on modulation scheme and a request signal for using the shared channel shared by all communication terminals under control of the base station apparatus, a spreading code selecting section that selects a spreading code for use in spreading a supplemental common pilot channel signal, based on the capability information of the determined communication terminal apparatus, and a directivity control section that transmits the transmit data and the supplemental common pilot channel signal to be transmitted to the determined communication terminal apparatus with the same directivity.

According to this configuration, since the base station transmits the information on the modulation scheme to demodulate shared channel signals by using the spreading code on the supplemental common pilot channel, the base station is capable of notifying the communication terminal using the shared channel of the information to demodulate shared channel signals in real time within a period of time the channel state is not changed. As a result, the base station is capable of performing any M-ary modulation on shared channel signals to transmit.

A radio base station apparatus of the present invention adopts a configuration provided with a determining section that determines a communication terminal apparatus that uses a shared channel based on a plurality of uplink request signals containing capability information on modulation scheme and a request signal for using the shared channel shared by all communication terminals under control of the base station apparatus, a pattern selecting section that selects a pilot pattern on a supplemental common pilot channel, based on the capability information of the determined communication terminal apparatus, and a directivity control section that transmits the transmit data and a signal on the supplemental common pilot channel to be transmitted to the determined communication terminal apparatus with the same directivity.

According to this configuration, since the base station transmits the information on the modulation scheme to demodulate shared channel signals by using the pilot pattern on the supplemental common pilot channel, the base station is capable of notifying the communication terminal using the shared channel of the information to demodulate shared channel signals in real time within a period of time the channel state is not changed. As a result, the base station is capable of performing any M-ary modulation on shared channel signals to transmit.

A radio base station apparatus of the present invention adopts a configuration provided with a determining section that determines a communication terminal apparatus that uses a shared channel based on a plurality of uplink request signals containing capability information on modulation scheme and a request signal for using the shared channel shared by all communication terminals under control of the base station apparatus, a control signal generating section that determines a modulation scheme based on the capability information of the determined communication terminal apparatus, generates a signal indicative of the determined modulation scheme, and inserts the generated signal as a control signal into a supplemental common pilot channel signal, and a directivity control section that transmits the transmit data and the supplemental common pilot channel signal to be transmitted to the determined communication terminal apparatus with the same directivity.

According to this configuration, since the base station transmits the information on the modulation scheme to demodulate shared channel signals on the supplemental common pilot channel, the base station is capable of notifying the communication terminal using the shared channel of the information to demodulate shared channel signals in real time within a period of time the channel state is not changed. As a result, the base station is capable of performing any M-ary modulation on shared channel signals to transmit.

A communication terminal apparatus of the present invention adopts a configuration provide with a despreading section that performs despreading on a downlink signal with each of all candidate spreading codes for a spreading code used in spreading a supplemental common pilot channel signal, a spreading code specifying section that compares despread results on the candidate spreading codes to specify the spreading code used in spreading the supplemental common pilot channel signal, and a demodulation section that demodulates downlink signals on a shared channel shared by all communication terminals under control of a base station, by a demodulation scheme corresponding to the specified spreading code.

According to this configuration, a communication terminal using the shared channel is capable of confirming the modulation scheme by identifying the spreading code. The communication terminal is thereby capable of demodulating signals on the shared channel with reliability.

A communication terminal apparatus of the present invention adopts a configuration provide with a channel estimation section that performs channel estimation on a downlink signal with each of all candidate pilot patterns for a pilot pattern used on a supplemental common pilot channel, a pilot pattern specifying section that compares channel estimation results on the candidate pilot patterns to specify the pilot pattern used on the supplemental common pilot channel, and a demodulation section that demodulates downlink signals on a shared channel shared by all communication terminals under control of a base station, by a demodulation scheme corresponding to the specified pilot pattern.

According to this configuration, a communication terminal using the shared channel is capable of confirming the modulation scheme by identifying the pilot pattern. The communication terminal is thereby capable of demodulating signals on the shared channel with reliability.

A communication terminal apparatus of the present invention adopts a configuration provided with a demodulation section that demodulates a control signal, inserted into a supplemental common pilot channel signal, indicative of a modulation scheme on downlink signals, and another demodulation section that demodulates downlink signals on a shared channel shared by all communication terminals under control of a base station, by a demodulation scheme corresponding to a demodulated result on the control signal.

According to this configuration, a communication terminal using the shared channel is capable of confirming the modulation scheme by identifying the signal inserted into the supplemental common pilot channel signal. The communication terminal is thereby capable of demodulating signals on the shared channel with reliability.

A wireless communication method of the present invention has a determining step of determining a communication terminal apparatus that uses a shared channel based on a plurality of uplink request signals containing a request signal for using the shared channel shared by all communication terminals under control of a base station apparatus, a modulation step of modulating transmit data and a supplemental common pilot channel signal to be transmitted to the determined communication terminal apparatus, and a directivity control step of transmitting the transmit data and the supplemental common pilot channel signal with the same directivity.

According to this method, since the supplemental common pilot channel signal is used which does not need to be transmitted always to the entire cell or sector, such a pilot channel is coupled with the shared channel shared by all communication terminals under control of the base station to transmit signals with the same directivity. It is there by possible to perform pathsearch and channel estimation on the shared channel using the supplemental common pilot channel signal. As a result, it is possible to demodulate shared channel signals with reliability and to perform fast data communications using the shared channel.

A wireless communication method of the present invention has a determining step of determining a communication terminal apparatus that uses a shared channel based on a plurality of uplink request signals containing capability information on modulation scheme and a request signal for using the shared channel shared by all communication terminals under control of the base station apparatus, a spreading code selecting step of selecting a spreading code for use in spreading a supplemental common pilot channel signal, based on the capability information of the determined communication terminal apparatus, and a directivity control step of transmitting the transmit data and the supplemental common pilot channel signal to be transmitted to the determined communication terminal apparatus with the same directivity.

According to this method, since the base station transmits the information on the modulation scheme to demodulate shared channel signals by using the spreading code on the supplemental common pilot channel, the base station is capable of notifying the communication terminal using the shared channel of the information to demodulate shared channel signals in real time within a period of time the channel state is not changed. As a result, the base station is capable of performing any M-ary modulation on shared channel signals to transmit.

A wireless communication method of the present invention has a determining step of determining a communication terminal apparatus that uses a shared channel based on a plurality of uplink request signals containing capability information on modulation scheme and a request signal for using the shared channel shared by all communication terminals under control of the base station apparatus, a pattern selecting step of selecting a pilot pattern on supplemental common pilot channel, based on the capability information of the determined communication terminal apparatus, and a directivity control step of transmitting the transmit data and the supplemental common pilot channel signal to be transmitted to the determined communication terminal apparatus with the same directivity.

According to this method, since the base station transmits the information on the modulation scheme to demodulate shared channel signals by using the pilot pattern on the supplemental common pilot channel, the base station is capable of notifying the communication terminal using the shared channel of the information to demodulate shared channel signals in real time within a period of time the channel state is not changed. As a result, the base station is capable of performing any M-ary modulation on shared channel signals to transmit.

A wireless communication method of the present invention has a determining step of determining a communication terminal apparatus that uses a shared channel based on a plurality of uplink request signals containing capability information on modulation scheme and a request signal for using the shared channel shared by all communication terminals under control of the base station apparatus, a control signal generating step of determining a modulation scheme based on the capability information of the determined communication terminal apparatus, generating a signal indicative of the determined modulation scheme, and inserting the generated signal as a control signal into a supplemental common pilot channel signal, and a directivity control step of transmitting the transmit data and the supplemental common pilot channel signal to be transmitted to the determined communication terminal apparatus with the same directivity.

According to this method, since the base station transmits the information on the modulation scheme to demodulate shared channel signals on the supplemental common pilot channel, the base station is capable of notifying the communication terminal using the shared channel of the information to demodulate shared channel signals in real time within a period of time the channel state is not changed. As a result, the base station is capable of performing any M-ary modulation on shared channel signals to transmit.

As described above, according to the present invention, since the supplemental common pilot channel signal is used which does not need to be transmitted always to the entire cell or sector, such a pilot channel is coupled with the shared channel shared by all communication terminals under control of the base station to transmit signals with the same directivity. It is thereby possible to perform path search and channel estimation on the shared channel using the supplemental common pilot channel signal. As a result, it is possible to demodulate shared channel signals with reliability and to perform fast data communications using the shared channel.

This application is based on the Japanese Patent Application No.2000-157430 filed on May 26, 2000, entire content of which is expressly incorporated by reference herein.

### Industrial Applicability

The present invention is applicable to a radio base station apparatus and wireless communication method in a digital wireless communication system.

## Claims

1. A radio base station apparatus comprising:
determining means for determining a communication terminal apparatus that uses a shared channel that is common to all the communication terminals under control of a base station, based on a request signal in each of a plurality of uplink signals and which contains a request signal for requesting the use of the shared channel;
modulation means for modulating transmission data and a supplemental common pilot channel signal to be transmitted to the determined communication terminal apparatus; and
directivity control means for transmitting the transmission data and the supplemental common pilot channel signal under the same directivity condition.

2. A radio base station apparatus comprising:
determining means for determining a communication terminal apparatus that uses a shared channel that is common to all the communication terminals under control of a base station, based on a request signal in each of a plurality of uplink signals and which contains capability information on modulation scheme and a request signal for requesting the use of the shared channel;
spreading code selecting means for selecting a spreading code for use in spreading a supplemental common pilot channel, based on the capability information of the determined communication terminal apparatus; and
directivity control means for transmitting transmission data and the supplemental common pilot channel signal to be transmitted to the determined communication terminal apparatus under the same directivity condition.

3. A radio base station apparatus comprising:
determining means for determining a communication terminal apparatus that uses a shared channel that is common to all the communication terminals under control of a base station, based on a request signal in each of a plurality of uplink signals and which contains capability information on modulation scheme and a request signal for requesting the use of the shared channel;
pattern selecting means for selecting a pilot pattern on a supplemental common pilot channel, based on the capability information of the determined communication terminal apparatus; and
directivity control means for transmitting a transmission data and the supplemental common pilot channel signal to be transmitted to the determined communication terminal apparatus under the same directivity condition.

4. A radio base station apparatus comprising:
determining means for determining a communication terminal apparatus that uses a shared channel that is common to all the communication terminals under control of a base station, based on a request signal in each of a plurality of uplink signals and which contains capability information on modulation scheme and a request signal for requesting the use of the shared channel;
control signal generating means for determining a modulation scheme based on the capability information of the determined communication terminal apparatus, generating a signal indicative of the determined modulation scheme, and inserting the generated signal as a control signal into a supplemental common pilot channel; and
directivity control means for transmitting the transmission data and the supplemental common pilot channel signal to be transmitted to the determined communication terminal apparatus under the same directivity condition.

5. A communication terminal apparatus comprising:
despreading means for despreading a downlink signal with each of all candidate spreading codes for a spreading code used in spreading a supplemental common pilot channel;
spreading code specifying means for comparing despread results on the candidate spreading codes to specify the spreading code used in spreading the supplemental common pilot channel; and
demodulation means for demodulating a downlink signal on a shared channel that is common to all communication terminals under control of a base station, by a demodulation scheme corresponding to the specified spreading code.

6. A communication terminal apparatus comprising:
channel estimation means for performing channel estimation on a downlink signal with each of all candidate pilot patterns for a pilot pattern used on a supplemental common pilot channel;
pilot pattern specifying means for comparing channel estimation results on the candidate pilot patterns to specify the pilot pattern used on the supplemental common pilot channel; and
demodulation means for demodulating a downlink signal on a shared channel that is common to all communication terminals under control of a base station, by a demodulation scheme corresponding to the specified pilot pattern.

7. A communication terminal apparatus comprising:
first demodulation means for demodulating a control signal, inserted on a supplemental common pilot channel, indicative of a modulation scheme on a downlink signal; and
second demodulation means for demodulating the downlink signal on a shared channel that is common to all communication terminals under control of a base station, by a demodulation scheme corresponding to a demodulated result on the control signal.

8. A wireless communication method comprising:
a determining step of determining a communication terminal apparatus that uses a shared channel that is common to all the communication terminals under control of a base station, based on a request signal in each of a plurality of uplink signals and which contains a request signal for requesting the use of the shared channel;
a modulation step of modulating transmission data and a supplemental common pilot channel signal to be transmitted to the determined communication terminal apparatus; and
a directivity control step of transmitting transmission data and the supplemental common pilot channel signal under the same directivity condition.

9. A wireless communication method comprising:
a determining step of determining a communication terminal apparatus that uses a shared channel that is common to all the communication terminals under control of a base station, based on a request signal in each of a plurality of uplink signals and which contains capability information on modulation scheme and a request signal for requesting the use of the shared channel;
a spreading code selecting step of selecting a spreading code for use in spreading a supplemental common pilot channel, based on the capability information of the determined communication terminal apparatus; and
a directivity control step of transmitting transmission data and the supplemental common pilot channel signal to be transmitted to the determined communication terminal apparatus under the same directivity condition.

10. A wireless communication method comprising:
a determining step of determining a communication terminal apparatus that uses a shared channel that is common to all the communication terminals under control of a base station, based on a request signal in each of a plurality of uplink signals and which contains capability information on modulation scheme and a request signal for requesting the use of the shared channel;
a pattern selecting step of selecting a pilot pattern on a supplemental common pilot channel, based on the capability information of the determined communication terminal apparatus; and
a directivity control step of transmitting transmission data and a signal on the supplemental common pilot channel to be transmitted to the determined communication terminal apparatus under the same directivity condition.

11. A wireless communication method comprising:
a determining step of determining a communication terminal apparatus that uses a shared channel that is common to all the communication terminals under control of a base station, based on a request signal in each of a plurality of uplink signals and which contains capability information on modulation scheme and a request signal for requesting the use of the shared channel;
a control signal generating step of determining a modulation scheme based on the capability information of the determined communication terminal apparatus, generating a signal indicative of the determined modulation scheme, and inserting the generated signal as a control signal into a supplemental common pilot channel; and
a directivity control step of transmitting the transmission data and the supplemental common pilot channel signal to be transmitted to the determined communication terminal apparatus with the same directivity.
